# EUROPEAN PATENT APPLICATION

(11) **EP 2 302 575 A2**
(43) Date of publication of application: **30.03.2011**
(21) Application number: 09798086.6
(22) Date of filing: 14.07.2009
(51) Int. Cl.: G06Q 20/00

(54) **ELECTRONIC SETTLEMENT METHOD**

(30) Priority: 15.07.2008 KR 20080068485
(71) Applicant: Park, Cheolhyoun, Yongin-si, Gyeonggi-do 701-303 (KR); Jin, Hyundong, Dongjak-gu, Seoul 106-308 (KR)
(72) Inventor: Park, Cheolhyoun, Yongin-si, Gyeonggi-do 701-303 (KR); Jin, Hyundong, Dongjak-gu, Seoul 106-308 (KR)
(74) Representative: Cabinet Plasseraud
(86) International application number: PCT/KR2009/003867
(87) International publication number: WO 2010/008183

(57) **Abstract**

The present invention relates to an electronic payment method, wherein when an account-receivable issuer issues an account receivable to a receiving party, the financial institution of the receiving party notifies a third-party payment system of the issue of the account receivable, all companies subscribed to the third-party payment system become issuers using the received account receivable or electronic certificate as securities and can issue electronic certificates, all the receiving parties which have received the electronic certificates can request the encashment of the corresponding electronic certificates from the third-party payment system by using the electronic certificates as securities in case where new electronic certificates are not issued, when the encashment is requested, the third-party payment system tracks the path of all the electronic certificates and the account receivable related to the electronic certificates for which the encashment has been requested, and the encashment is performed on the financial accounts of all the companies on the path.

## Description

### [Technical Field]

The present invention relates to an electronic payment method. More particularly, the present invention relates to an electronic payment method, wherein when an account-receivable issuer issues an account receivable to a receiving party, the financial institution of the receiving party notifies a third-party payment system of the issue of the account receivable, all companies subscribed to the third-party payment system become issuers using the received account receivable or electronic certificate as securities and can issue electronic certificates, all the receiving parties which have received the electronic certificates can request the encashment of the corresponding electronic certificates from the third-party payment system by using the electronic certificates as securities in case where new electronic certificates are not issued, when the encashment is requested, the third-party payment system tracks the path of all the electronic certificates and the account receivable related to the electronic certificates for which the encashment has been requested, and the encashment is performed on the financial accounts of all the companies on the path. Accordingly, an issuer can suspend payments for an account receivable, such as a received purchase card bill and a received electronic bill, an electronic certificate, cash, and credit and easily issue an electronic certificate. A receiving party can receive an electronic certificate for which payment has been suspended and which has solid collateral and may also have an electronic certificate discounted with a low fee as occasion demands. Furthermore, there is an advantage in that in case where a receiving party encashes an electronic certificate, an issuer can make additional profits because it is supplied with small and medium enterprise promotion compensation money.

### [Background Art]

Korean Laid-open Patent Publication No. 10-2007-0039015 (Application No. 10-2007-0028385, Cited Invention) discloses an electronic payment method.

The Cited Invention relates to the electronic payment method, wherein an issuer issues an electronic certificate to a receiving party, the amount of the certificate is transferred to the account of the receiving party after the expiration date of the electronic certificate, fees, including expenses to be supplied to a financial institution and a system providing company and expenses to be supplied to the issuer, are calculated when the receiving party requests payment for the electronic certificate before the expiration date of the electronic certificate, and the amount of calculation is supplied.

### [Disclosure]

### [Technical Problem]

However, the conventional Cited Invention is problematic in that in case where a receiving party requests payment for an electronic certificate, a loan has to be generated because an electronic certificate of the account of an issuer is not encashed, and loans for the electronic certificates of upper accounts have to be sequentially generated.

That is, in order for a loan to be generated per step, each of receiving parties must make a loan agreement with a financial institution. In order to make the agreement, the credit of the receiving parties has to be included in a current financial system. Accordingly, there is estrangement with the current financial system. Furthermore, if a loan is generated, a real loan of the financial institution is the amount of money at the first step, but treated as a loan per step. Consequently, a lot of loads are treated as being generated in the financial institution. Accordingly, the total loan limits are reduced, the reserve fund is all accumulated, the profits of a financial institution are reduced, and a financial institution has to manage dual risks.

### [Technical Solution]

In order to solve the above conventional problems, the present invention provides an electronic payment method using a third-party payment server, a network, a terminal configured to access the third-party payment server over the network, and a financial institution server connected to the network, including an account-receivable issue step of an account-receivable issuer issuing an account receivable to a financial account of the financial institution server; an account-receivable date transmission step of sending data related to the account receivable to a third-party payment account of the third-party payment server; an electronic certificate issue step of issuing an electronic certificate having an encashment commission rate from a third-party payment account of the issuer to a third-party payment account of a receiving party by using an already received account receivable or electronic certificate as collateral; a repetition step of performing the electronic certificate issue step in which the receiving party becomes an issuer and issues an electronic certificate to a third-party payment account of another receiving party; a payment suspension step of suspending payment of the already received account receivable or electronic certificate which is the collateral of the electronic certificate, issued in the electronic certificate issue step or the repetition step, by a mortgage amount or making impossible a request for the payment of the already received account receivable or electronic certificate; a payment request step of the receiving party requesting payment of cash for any one of the received electronic certificates; a tracing step of the third-party payment server tracing a path of all electronic certificates or accounts receivable which are related to the electronic certificate for which the payment of cash has been requested in the payment request step; and an encashment step of, in case where there is an account receivable having an expiration date not elapsed in the path traced in the tracing step, encashing the account receivable, sequentially subtracting an encashment commission according to an encashment commission rate written in each of the electronic certificates from a first electronic certificate having an expiration date not elapsed, and performing deposition in associated financial accounts.

Here, an "issuer" and a "receiving party" refer to the account of the issuer and receiving party or the accounts of a corresponding company determined in a system according to the present invention. An "electronic certificate" is a document, an electronic document, or an electronic signal which proves that there is payment, a bond and the like or which stipulates the payment of the amount of money written therein until the expiration date. The "electronic certificate" is used like settlement according to a conventional purchase card, a secured loan from an electronic credit sales bond, an electronic bill, or an electronic bond or used as a comprehensive term including them. An "account receivable" is a document, providing that there is payment, a bond, etc. or stipulating the payment of the amount of money written therein until the expiration date, electronic data in which a real account receivable is presented to a financial institution and becomes electronic, an electronic document, or an electronic signal. The "account receivable" is used like settlement according to a conventional purchase card, a secured loan from an electronic credit sales bond, an electronic bill, or an electronic bond or used as a comprehensive term including them. In the present specification herein, they have the same meanings.

### [Advantageous Effects]

As described above, according to the present invention, an issuer may stop payments for an account receivable, such as a received purchase card bill and a received electronic bill, an electronic certificate, cash, and credit and may easily issue an electronic certificate. A receiving party may receive an electronic certificate for which payment has been suspended and which has solid collateral and may also have an electronic certificate discounted with a low fee as occasion demands. Furthermore, there is an advantage in that in case where a receiving party encashes an electronic certificate, an issuer can make additional profits because it is supplied with small and medium enterprise promotion compensation money.

### [Description of Drawings]

FIG. 1 shows the construction of a system according to an embodiment of the present invention; and
FIG. 2 shows the flow of data according to an embodiment of the present invention.

### <Description of reference numerals of principal elements in the drawings>

| | | |
|---|---|---|
| 10. third-party payment server | | 11. member DB |
| 12. third-party payment account DB | | |
| 13. electronic certificate DB | | |
| 15. account-receivable date reception module | | |
| 16. encashment commission rate setting module | | |
| 17. electronic certificate issue module | | |
| 18. payment request module 19. path tracing module | | |
| 20. small and medium enterprise promotion compensation money payment module | | |
| 30. network | | 40. terminal |
| 50. financial institution server | | 51. member DB |
| 52. financial account DB | | |
| 54. account-receivable issue module | | |
| 55. account-receivable date transmission module | | |
| 56. encashment module | | |

① account-receivable issue step
② account-receivable date transmission step
③ electronic certificate issue step
④ and ⑤ repetition step
⑥ payment request step
⑦, ⑧, and ⑨ tracing step
⑩, ⑪, ⑫, ⑬, and ⑭ encashment step
⑮ account-receivable amount deposition step

### [Best Mode for Carrying Out the Invention]

The present invention is described in detail with reference to the accompanying drawings. However, the drawings are for only illustrative purposes, and the present invention is not limited thereto.

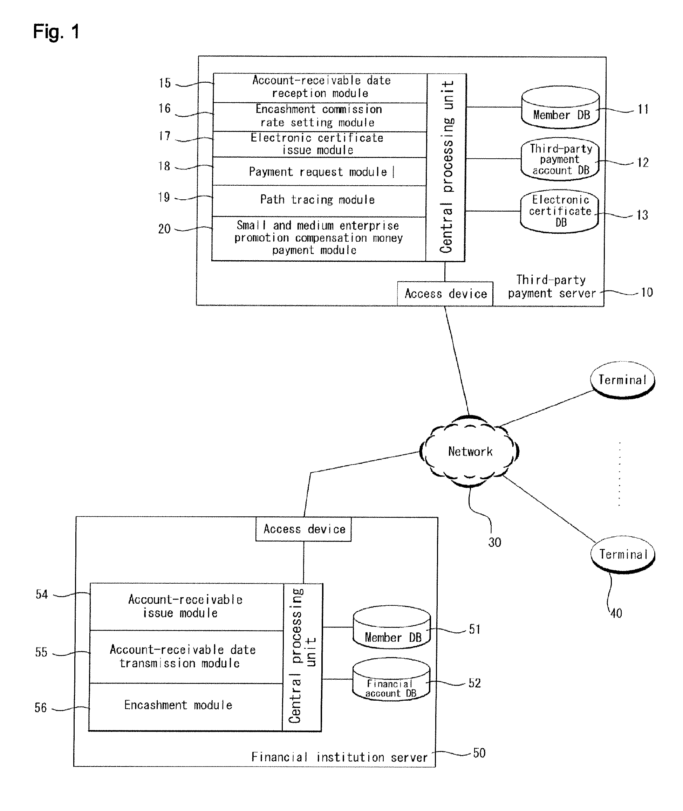

FIG. 1 shows the construction of a system according to an embodiment of the present invention.

Referring to FIG. 1, the system of the present invention includes a third-party payment server 10, a network 30, a terminal 40, and a financial institution server 50. The financial institution server 50 refers to the server of a financial institution which connects to the network 30 over a bank network.

The third-party payment server 10 includes a member DB 11, a third-party payment account DB 12, an electronic certificate DB 13, an account-receivable date reception module 15, an encashment commission rate setting module 16, an electronic certificate issue module 17, a payment request module 18, a path tracing module 19, and a small and medium enterprise promotion compensation money payment module 20.

The member DB 11 is a database to which an issuer and a receiving party subscribes as a member. The member is given rights to issue and receive an electronic certificate. A company that issues an electronic certificate may be certified using an ID, a password, an official certificate, a password according to an OTP card, or an USB token or a combination of some of them and may then log in the member DB 11.

It is preferred that a company may subscribe to the member DB 11 as a member only in the case in which the company receives an electronic certificate without issuing the electronic certificate.

The third-party payment account DB 12 is a DB in which information about an account receivable (the account receivable refers to account-receivable date transmitted by a financial institution server, and the account receivable or the account receivable information described in the third-party payment server refers to account-receivable date, which is the same hereinafter) or an electronic certificate issued or received for every member are recorded. The third-party payment account DB 12 may also be integrated with the member DB 11.

The electronic certificate DB 13 is a DB in which information pertinent to issued electronic certificates is recorded, and it consists of fields, such as commitments, an agreement date, an encashment request date, an encashment date, and an encashment commission rate. It is preferred that the electronic certificate of the electronic certificate DB 13 and the electronic certificate of the third-party payment account DB 12 are cross-checked. It is preferred that the electronic certificate DB 13 include information about accounts receivable.

The receiving party, commitments, and agreement date of an electronic certificate are determined and issued by an issuer.

A payment date is a date on which commitments are actually encashed. The encashment request date is a date on which a receiving party has requested the encashment of commitments. The encashment date is a date on which an issuer has encashed the amount of money from which fees have been subtracted from a receiving party according to commitments or an encashment commission rate. The encashment commission rate is a commission rate determined at the time an electronic certificate is issued and has to be paid by a receiving party.

The member DB 11, the third-party payment account DB 12, and the electronic certificate DB 13 may be integrated into a single DB or divided into a plurality of DBs as occasion demands.

The account-receivable date reception module 15 receives data of an account receivable transmitted by the financial institution server 50 and stores the received data in the third-party payment account DB 12 of a corresponding member.

The encashment commission rate setting module 16 is a module for setting the encashment commission rate of an electronic certificate issued by an issuer.

When an issuer requests an electronic certificate to be issued through the terminal, the encashment commission rate setting module 16 displays a list of and information about accounts receivable and electronic certificates, stored in the third-party payment account DB 12 of the issuer, through the terminal of the issuer. Next, when the issuer selects the amount of money and an agreement date of an electronic certificate to be issued, selects one of or both the displayed account receivable and the displayed electronic certificate, and selects the amount of money of the selected electronic certificate, the encashment commission rate setting module 16 finds a weighted average of encashment commission rates for each amount of money of the corresponding electronic certificate and sets the encashment commission rate of the electronic certificate to be issued by adding predetermined numerical values (e.g., a system commission, an operating commission, a server commission, and a small and medium enterprise promotion compensation commission) to the found weighted averaged encashment commission rate. Here, although all the accounts receivable and the electronic certificates stored in the third-party payment account DB 12 of the issuer may be displayed, it is preferred that only electronic certificates having an agreement date before expiration of a certain term or an agreement date after a predetermined date be displayed. This is because it is advantageous for an issuer for to suspend the payment of an electronic certificate having a long agreement date, encash an electronic certificate having a short agreement date, and use the encashed electronic certificate as cash, rather than to suspend the payment of an electronic certificate having a short agreement date. If an issuer wants, the payment of an account receivable or an electronic certificate having a short agreement date may be suspended.

As described above, the encashment commission rate setting module 16 may display the account receivables and the electronic certificates, stored in the third-party payment account DB 12 of the issuer, through the terminal of the issuer so that the issuer selects an electronic certificate for which payment will be suspended. However, if an issuer determines an encashment commission rate of an electronic certificate to be issued, an account receivable and an electronic certificate for which payment will be suspended may be automatically selected. That is, when an amount of money, an agreement date, and an encashment commission rate of an electronic certificate to be issued are displayed in the terminal of an issuer so that the issuer can select them (i.e., the issuer arbitrarily inputs the amount of money, the agreement date, and the encashment commission rate of the electronic certificate to be issued) and the issuer selects the amount of money, the agreement date, and the encashment commission rate of the electronic certificate to be issued, a combination of a numerical value in which predetermined numerical values (e.g., a system commission, an operating commission, a server commission, and a small and medium enterprise promotion compensation commission) have been subtracted from the encashment commission rate and a weighted average of encashment commission rates of electronic certificates stored in the third-party payment account DB 12 of the issuer which are issued likewise is found. In case where the number of combinations is plural, a combination most advantageous for the issuer (a combination having the most late agreement date, a combination of electronic certificates having the lowest credit grades of the issuer, etc.) may be forcibly selected or the issuer may select the best combination.

When the issuer selects the amount of money and the agreement date (i.e., the expiration date) of the electronic certificate to be issued, the encashment commission rate setting module 16 displays encashment commission rates which may be combined from the accounts receivable and the electronic certificates in the account of the issuer in the terminal of the issuer so that the issuer selects any one of the displayed encashment commission rates. Accordingly, an account receivable and an electronic certificate suitable for the encashment commission rate may be selected.

When the encashment commission rate is set by the encashment commission rate setting module 16, the electronic certificate issue module 17 suspends payment for the amount of money of the account receivable and the electronic certificate selected when the encashment commission rate is set and issues the electronic certificate to a receiving party. The electronic certificate is electronically sent to a payee (i.e., the receiving party). The electronic certificate is processed in the same manner as or similarly to a common electronic bill or a purchase card settlement slip. The receiving party may be separately notified that the electronic certificate has been issued as occasion demands or the electronic certificate may be directly delivered to the receiving party. The issued electronic certificate is also recorded in the third-party payment account DB 12 of the issuer.

The suspension of payment may be performed by an additional payment suspension module or by the encashment commission rate setting module 16. If the amount of money for the account receivable or the electronic certificate for which payment has been suspended is deposited in the financial account of the issuer after a lapse of the agreement date, it is preferred that the suspension of payment for the corresponding electronic certificate be released, payment for the deposited cash be suspended, and the issuer agrees with them when an electronic certificate is issued. It is preferred that a financial institution operate commodities having a high interest rate, such as MMF and CMA, for the cash deposited in the financial account of the issuer so that the issuer can have a high interest despite the suspension of payment.

The payment request module 18 enables a receiving party who has received an electronic certificate to request the encashment of the electronic certificate as occasion demands. The payment request module 18 provides a receiving party with a payment request screen, and the receiving party requests the prepayment of commitments.

If a single receiving party requests the payment of commitments for an electronic certificate received through the payment request module 18, the path tracing module 19 traces a path for all electronic certificates and accounts receivable which are related to the issue of the electronic certificate that the receiving party has requested payment. That is, the path tracing module 19 continues to sequentially trace an electronic certificate for which payment has been suspended in order for the electronic certificate for which payment has been requested to be issued and an electronic certificate paid in order for the electronic certificate for which payment has been suspended to be issued. In case where a predetermined electronic certificate or account receivable has already been encashed (i.e., in case where cash has been deposited from an issuer after a lapse of an agreement date) as a result of the tracing, the electronic certificate or the account receivable needs not to be traced.

The encashment module 20 sequentially performs encashment from the first account receivable or the first electronic certificate from among the accounts receivable and the electronic certificates traced by the path tracing module 19. That is, the traced first account receivable may be purchased by the third-party payment server 10, the amount of money discounted by a financial institution from the traced first account receivable may be transferred to a corresponding financial account, or a financial institution may generate a loan using the account receivable as collateral. The first electronic certificate has already been encashed in the financial account of the issuer. Thus, the encashment commission rate is subtracted from the financial account of the issuer of the corresponding electronic certificate and cash is deposited in the financial account of a payee of the corresponding electronic certificate. It is preferred that issuers or receiving parties agree with the encashment of accounts receivable for which payment has been suspended, when subscribing to members or an electronic certificate is issued, through purchase, a discount, or a loan in case where the encashment is requested.

The encashment module 20 continues to subtract a commission according to the encashment commission rate from the financial account of the issuer for subsequent electronic certificates and deposit cash in the financial account of the receiving party. Here, the commission according to the encashment commission rate corresponds to the difference between the encashment commission rate of the receiving party and the encashment commission rate of the issuer.

The small and medium enterprise promotion compensation money payment module 20 pays some of the commission subtracted according to the encashment commission rate to the issuer as small and medium enterprise promotion compensation money in return for the settlement using an electronic payment method according to the present invention so that the receiving party is not chain-dishonored. The small and medium enterprise promotion compensation money may be referred to another term as occasion demands.

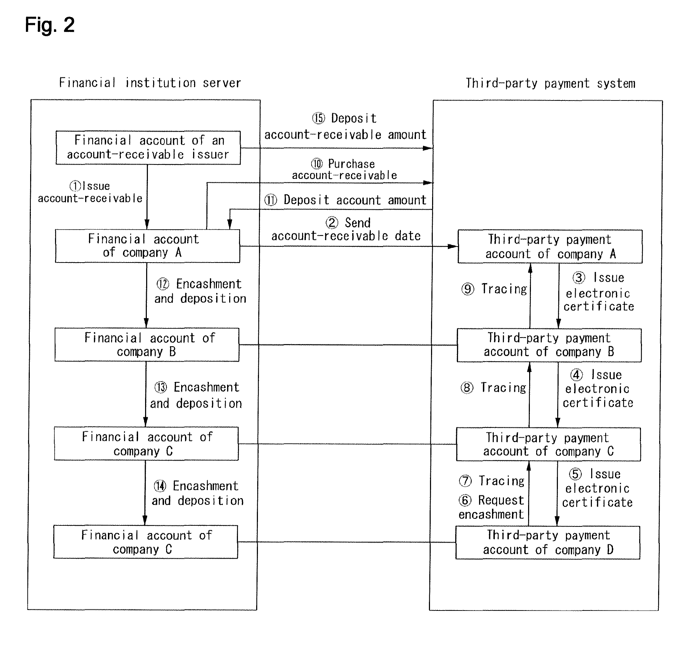

FIG. 2 is a flowchart according to an embodiment of the present invention.

Referring to FIG. 2, an account-receivable issuer issues (①) an account receivable in the financial account of a company A in a financial account.

The financial institution server sends data for the account receivable received in the financial account of the company A to a third-party payment system. The third-party payment system records (②) the account-receivable data as a third-party payment account of the company A.

The company A accesses the third-party payment system through the terminal and issues (③) an electronic certificate to a company B by using an owned account receivable (refers to the account-receivable data) or electronic certificate as collateral.

The company B accesses the third-party payment system through the terminal and issues (④) an electronic certificate to a company C by using the owned account receivable (refers to the account-receivable date) or electronic certificate as collateral.

The company C accesses the third-party payment system through the terminal and issues (⑤) an electronic certificate to a company D by using the owned account receivable (refer to the account-receivable data) or electronic certificate as collateral.

After step ⑤, the company D may issue an electronic certificate to other company.

When the electronic certificates are issued (③, ④, and ⑤), information, such as a receiving party, commitments, and an agreement date (i.e., an expiration date), must be written. In case where a receiving party is not a member, the above process may be performed after the receiving party subscribes to a member. Alternatively, an electronic certificate may be issued to a receiving party who is not a member as occasion demands and then the receiving party may subscribe to the member.

When the electronic certificates are issued (③, ④, and ⑤), it is preferred that a receiving party, commitments, an agreement date (i.e., an expiration date), a received account receivable associated with the electronic certificate, and electronic certificate data, such as an electronic certificate, be sent to the financial institution server.

The third-party payment server automatically informs an issuer of encashment commission rates selectable by the issuer so that the issuer can select an encashment commission rate or select electronic certificates in the account of the issuer. Accordingly, the encashment commission rate can be calculated and set.

In case where security solvency is short, such as that the amount issued (commitments) requested by an issuer exceeds the range of an electronic certificate owned by the issuer, an electronic certificate may not be issued.

A receiving party who has received an electronic certificate is paid commitments (an amount of money written in the electronic certificate) from an issuer on an agreement date (i.e., an expiration date). The payment of the commitments includes the transfer of a corresponding amount of money from the financial account of the issuer to the financial account of the receiving party.

The company D requests (⑥) the third-party payment system to encash the electronic certificate received from the company C at step ⑤.

The encashment request step ⑥ means that the receiving party who has received the electronic certificate requests encashment (i.e., the payment of the commitments) from the third-party payment system before the agreement date (i.e., the expiration date). The request of the encashment is the reception of payment prior to the agreement date, and it means payment from which expenses according to the encashment commission rate determined are subtracted.

When the receiving party requests encashment (⑥), the third-party payment system traces (⑦, ⑧, and ⑨) the issue history of the electronic certificate for which encashment has been requested by the company D. The third-party payment system searches for the first account receivable or electronic certificate in each path by tracing the path of all the accounts receivable and electronic certificates which are used to issue the electronic certificate for which encashment has been requested.

Since the first account receivable has not yet been encashed as a result of the tracing, the third-party payment system purchases (⑩) the account receivable in the financial account of the company A and deposits (⑪) a purchase price (i.e., a discount amount) in the financial account of the company A. The account receivable purchase step ⑩ and the discount amount deposition step ⑩ may be discounted by the financial institution server or replaced with a collateral loan as occasion demands.

If, as a result of the tracing, the account receivable has already been encashed (e.g., in case where the account receivable of the company A received from the account-receivable issuer has already been encashed after a lapse of the expiration date), the first electronic certificate is encashed. That is, the steps ⑩ and ⑪ are not performed.

An encashment commission is subtracted from the cash deposited in the financial account of the company A, and the remaining cash is deposited (⑫) in the financial account of the company B. An encashment commission is subtracted from the cash deposited in the financial account of the company B, and the remaining cash is deposited (⑬) in the financial account of the company C. An encashment commission is subtracted from the cash deposited in the financial account of the company C, and the remaining cash is deposited (⑭) in the financial account of the company D.

The financial accounts of the company A, the company B, the company C, and the company D are specified to the third-party payment accounts of the companies, and the financial institution server and the third-party payment system closely exchange various data. Accordingly, the encashment and the deposition (⑫, ⑬, and ⑭) may be smoothly performed.

When the expiration date of the account receivable is reached, the account receivable is deposited (⑮) from the financial account of the account-receivable issuer to the third-party payment system.

Here, the account-receivable purchase step (⑩), the discount amount deposition step (⑪), and the account-receivable deposition step (⑮) are illustrated to be performed in the third-party payment system, but this is only for understanding. They substantially mean that the account receivable is purchased (⑩) as the financial account of each third-party payment system (refers to the operating company of the third-party payment system), the discount amount is deposited (⑪) from the financial account of the third-party payment system (refers to the operating company of the third-party payment system) to the financial account of the company A, and the account receivable is deposited (⑮) from the financial account of the account-receivable issue to the financial account of the third-party payment system (refers to the operating company of the third-party payment system).

The commissions in the encashment and deposition steps ⑫, ⑬, and ⑭ include a system commission, an operating commission, small and medium enterprise promotion compensation money and the like. The system commission is provided to a third-party payment system providing company according to the present invention, the operating commission is provided to a financial institution, and the small and medium enterprise promotion compensation money is provided to an issuer.

The small and medium enterprise promotion compensation money is appropriately half the commission according to the difference between an encashment commission rate of the receiving party of one electronic certificate and an encashment commission rate of an electronic certificate (refers to an electronic certificate for which payment has been suspended) received by an issuer. The small and medium enterprise promotion compensation money may not be paid or reduced or increased, as occasion demands.

Embodiments of the present invention according to FIGS. 1 and 2 are described below. It is, hereinafter, assumed that the encashment commission rate of an electronic certificate includes 0.2% per month in the encashment commission rate of an electronic certificate for which payment will be suspended in the account of an issuer.

### Case 1

It is assumed that a company A takes delivery of goods corresponding to a hundred million won from a company B and issues an account receivable on condition that the hundred million won is settled after 3 months and a purchase commission rate is 0.5% per month (the purchase commission rate is a discount rate of a bank or a commission applied when a third-party payment system purchases the account receivable).

The company A (it is assumed that the company A is allowed to issue the account receivable as credit in a financial institution because it is a main contractor and has a high credit rating) issues the account receivable on condition that a receiving party is the company B, the date of issue is March 1, 2008, an agreement date (i.e., a payment date) is June 1, 2008, and a purchase commission rate is 0.5% per month (here, the purchase commission is a discount rate determined by other institution or a financial institution in case where the company B purchases the account receivable in advance from other institution or where a financial institution discounts the account receivable).

The account receivable has been issued as the financial account of the company B. Account-receivable data in the financial account of the company B is sent to a third-party payment system to which the company B has been subscribed as a member and then inputted to the third-party payment account of the company B.

The company B did not need to immediately encash the account receivable and has owned the account receivable received from the company A.

On May 1, 2008, the company B takes delivery of goods corresponding to 70 million won from a company C, accesses the third-party payment system, and issues an electronic certificate1 on condition that the electronic certificate1 is settled after 3 months and an encashment commission rate is 0.7% per month (here, the encashment commission rate of the electronic certificate1 is the addition of 0.2% per month to the encashment commission rate of the account receivable for which payment will be suspended and is determined by the third-party payment system according to the present invention).

The payment of 70 million won from the amount of money of the account receivable in the financial account has been suspended, and the company B has issued the electronic certificate1 on condition that the receiving party of the electronic certificate1 is the company C, the date of issue is May 1, 2008, the agreement date (i.e., the payment date) is August 1, 2008, and the encashment commission is 0.7% per month. Here, the company B may not arbitrarily encash 70 million won from the amount of money of the account receivable.

The company C needs to immediately encash the electronic certificate1 and thus requests the third-party payment system to encash the electronic certificate1 as soon as it receives the electronic certificate1 from the company B.

The third-party payment system traces the issue path of the electronic certificate1 for which encashment has been requested by the company C, has to encash the account receivable (i.e., the amount of encashment: 70 million won) and the electronic certificate1 (i.e., the amount of encashment: 70 million won), and verifies that the account receivable is the first certificate.

The third-party payment system sends data (e.g., the name of the issuer, the name of the receiving party, the amount issued, the agreement date, and the encashment commission rate) for the electronic certificate1 to the financial institution server.

First step: it is assumed that the third-party payment system purchases 70 million won from the amount of money of the account receivable. The third-party payment system calculates an encashment commission (70 million won*1 month*0.5%=350,000 won), corresponding to 70 million won from the amount of money of the account receivable, and deposits 69,650,000 won in which the encashment commission has been subtracted from 70 million won) in the financial account of the company B. The encashment commission 350,000 won may be used as interest according to the purchase (i.e., a share of the third-party payment system and a share of a bank share in case where the bank lends money), a system use fee (i.e., a share of the third-party payment system), a management fee and so on. Here, it is assumed that the encashment commission 350,000 won is used as only interest according to the purchase.

Second step: the third-party payment system calculates a total encashment commission (70 million won*3 months*0.7%=1,470,000 won) corresponding to 70 million won of the electronic certificate1, and 68,530,000 won in which the total encashment commission has been subtracted from 70 million won has to be transferred from the financial account of the company B to the financial account of the company C. In this step, since an encashment commission that the third-party payment system will receive from the financial account of the company B is 420,000 won (70 million won*3 months*the difference 0.2% between the encashment commission rates) (the difference 0.2% between the encashment commission rates = the encashment commission rate 0.7% of the electronic certificate1-the purchase commission rate 0.5% of the account receivable), 68,950,000 won is withdrawn from the financial account of the company B, 68,530,000 won from the withdrawn 68,950,000 won is deposited in the financial account of the company C, and the remaining 420,000 won is deposited in the financial account of the third-party payment system.

The encashment commission 420,000 won is used as a system use fee (a share of the third-party payment system is assumed to be 210,000 won) and the small and medium enterprise promotion compensation money (a share of the company B is assumed to be 210,000 won).

The difference 700,000 won between 69,650,000 won deposited in the financial account of the company B in the first step and 68,950,000 won withdrawn from the financial account of the company B in the second step is a profit (70 million won*2 months*0.5%) of the company B which occur according to the difference in the remaining term of the account receivable and the electronic certificate1.

Profit and loss for each institution are described below. The company A has no profit and loss because it has only to pay a hundred million won that should be paid on the predetermined date (i.e., June 1, 2008). The company B makes a profit of 700,000 won according to the difference in the remaining term between the account receivable and the electronic certificate1 and of the small and medium enterprise promotion compensation money 210,000 won. The company C pays the encashment commission of 1,470,000 won, though, but has an advantage in that it can perform early encashment prior to 3 months. The third-party payment system earns interest incomes of 350,000 won according to the purchase of the account receivable 70 million won in advance 1 month earlier (a bank share in case where the bank purchases the account receivable or loads money for the account receivable) and makes a profit of the system use fee 210,000 won.

### Case 2

It is assumed that a company A takes delivery of goods corresponding to a hundred million won from a company B and issues an account receivable on condition that the hundred million won is settled after 3 months and a purchase commission rate is 0.5% per month.

The company A (it is assumed that the company A is allowed to issue the account receivable as credit in a financial institution because it is a main contractor and has a high credit rating) issues the account receivable on condition that a receiving party is the company B, the date of issue is March 1, 2008, an agreement date (i.e., a payment date) is June 1, 2008, and a purchase commission rate is 0.5% per month (here, a purchase commission is a discount rate determined by other institution or a financial institution in case where the company B purchases the account receivable in advance from other institution or where a financial institution discounts the account receivable).

The account receivable has been issued as the financial account of the company B. Account-receivable data in the financial account of the company B is sent to a third-party payment system to which the company B has been subscribed as a member and then inputted to the third-party payment account of the company B.

The company B did not need to immediately encash the account receivable and has owned the account receivable received from the company A.

On April 1, 2008, the company B takes delivery of goods corresponding to 70 million won from a company C. The company B accesses the third-party payment system and issues an electronic certificate1 on condition that the electronic certificate1 is settled after 3 months and an encashment commission rate is 0.7% per month (here, an encashment commission rate of the electronic certificate1 is the addition of 0.2% per month to an encashment commission rate of the account receivable for which payment will be suspended and determined by the third-party payment system according to the present invention).

The payment of 70 million won from the amount of money of the account receivable in the financial account has been suspended, and the company B has issued the electronic certificate1 on condition that the receiving party of the electronic certificate1 is the company C, the date of issue is April 1, 2008, the agreement date (i.e., the payment date) is July 1, 2008, and the encashment commission is 0.7% per month. Here, the company B may not arbitrarily encash 70 million won from the amount of money of the account receivable. The electronic certificate1 has been issued as the third-party payment account of the company C.

The company C does not need to immediately encash the electronic certificate1 and owns the electronic certificate1 received from the company B.

On May 1, 2008, the company C takes delivery of goods corresponding to 50 million won from a company D and issues an electronic certificate2 on condition that the electronic certificate2 is settled after 3 months and an encashment commission rate is 0.9% per month (here, the encashment commission rate of the electronic certificate2 to be issued is the addition of 0.2% per month to the encashment commission rate of the account receivable1 and determined by the third-party payment system according to the present invention).

The payment of 50 million won from the amount of money of the electronic certificate1 in the third-party payment account has been suspended, and the company C has issued the electronic certificate2 on condition that the receiving party of the electronic certificate2 is the company D, the date of issue is May 1, 2008, the agreement date (i.e., the payment date) is August 1, 2008, and the encashment commission is 0.9% per month. Here, the company C may not arbitrarily encash 50 million won from the amount of money of the electronic certificate1.

The company D needs to immediately encash the electronic certificate2 and thus requests the third-party payment system to encash the electronic certificate2 as soon as it receives the electronic certificate2 from the company C.

The third-party payment system according to the present invention traces the issue path of the electronic certificate2 for which encashment has been requested by the company D, has to encash the account receivable (i.e., the amount of encashment: 50 million won), the electronic certificate1 (i.e., the amount of encashment: 50 million won), and the electronic certificate2 (i.e., the amount of encashment: 50 million won), and verifies that the account receivable is the first certificate.

The third-party payment system sends data (e.g., the name of the issuer, the name of the receiving party, the amount issued, the agreement date, and the encashment commission rate) for the electronic certificate1 and the electronic certificate1 to the financial institution server.

First step: it is assumed that the third-party payment system purchases 50 million won from the amount of money of the account receivable. The third-party payment system calculates an encashment commission (50 million won*1 month*0.5%=250,000 won), corresponding to 50 million won from the amount of money of the account receivable, and deposits 69,750,000 won in which the encashment commission has been subtracted from 50 million won) in the financial account of the company B (in case where a bank makes a discount, the bank deposits the money in the financial account of the company B). The encashment commission 250,000 won according to the purchase in advance may be used as interest according to the purchase (i.e., a share of the third-party payment system and a share of a bank in case where the bank lends money or performs the purchase), a system use fee (i.e., a share of the third-party payment system), a management fee and so on. Here, it is assumed that the encashment commission 250,000 won is used as only interest according to the purchase.

Second step: the third-party payment system calculates a total encashment commission (50 million won*2 months*0.7%=700,000 won) corresponding to 50 million won of the electronic certificate1, and 49,300,000 won in which the total encashment commission has been subtracted from 50 million won has to be deposited in the financial account of the company C. In this step, since an encashment commission that the third-party payment system has to receive is 200,000 won (50 million won*2 months*the difference 0.2% between the encashment commission rates) (the difference 0.2% between the encashment commission rates = the encashment commission rate 0.7% of the electronic certificate1 - the purchase commission rate 0.5% of the account receivable), 49,500,000 won is withdrawn from the financial account of the company B, 49,300,000 won from the withdrawn 49,500,000 won is deposited in the financial account of the company C, and the remaining 200,000 won is deposited in the financial account of the third-party payment system.

The encashment commission 200,000 won is used as a system use fee (a share of the third-party payment system is assumed to be 100,000 won) and the small and medium enterprise promotion compensation money (a share of the company B is assumed to be 100,000 won).

The difference 250,000 won between 49,750,000 won deposited in the financial account of the company B in the first step and 49,500,000 won withdrawn from the financial account of the company B in the second step is a profit (50 million wan*1 month*0.5%) of the company B which occur according to the difference in the remaining term of the account receivable and the electronic certificate1.

Third step: the third-party payment system calculates a total encashment commission (50 millions won*3 months*0.9%=1,350,000 won), corresponding to 50 millions won of the electronic certificate2, and 48,650,000 won in which the total encashment commission has been subtracted from 50 millions won has to be transferred from the financial account of the company C to the financial account of the company D. In this step, since an encashment commission that the third-party payment system will receive from the financial account of the company C is 300,000 won (50 millions won*3 months*the difference 0.2% between the encashment commission rates) (the difference 0.2% between the encashment commission rates = the encashment commission rate 0.9% of the electronic certificate2 - the encashment commission rate 0.7% of the electronic certificate1), 48,950,000 won is withdrawn from the financial account of the company C, 48,650,000 won from the withdrawn 48,950,000 won is deposited in the financial account of the company D, and the remaining 300,000 won is deposited in the financial account of the third-party payment system.

The encashment commission 300,000 won is used as a system use fee (a share of the third-party payment system is assumed to be 150,000 won) and small and medium enterprise promotion compensation money (a share of the company C is assumed to be 150,000 won).

Here, the difference 350,000 won between 49,300,000 won deposited in the financial account of the company C in the first step and 48,650,000 won withdrawn from the financial account of the company C in the third step makes a profit (50 millions won*1 month*0.7%) of the company C which are generated according to the difference in the remaining term between the electronic certificate1 and the electronic certificate2.

Profit and loss for each institution are described below. The company A has no profit and loss because it has only to pay a hundred million won that should be paid on the predetermined date (i.e., June 1, 2008). The company B makes a profit of 250,000 won according to the difference in the remaining term between the account receivable and the electronic certificate1 and of the small and medium enterprise promotion compensation money 100,000 won. The company C makes a profit of 350,000 won according to the difference in the remaining term between the electronic certificate1 and the electronic certificate2 and of the small and medium enterprise promotion compensation money 150,000 won. The company D pays the encashment commission of 1,350,000 won, though, but has an advantage in that it can perform early encashment prior to 3 months. The third-party payment system earns interest income of 250,000 won according to the purchase of the account receivable 50 million won in advance 1 month earlier and makes a profit of management commissions 250,000 won (100,000 won+150,000 won).

### Case 3

It is assumed that a company A takes delivery of goods corresponding to a hundred million won from a company B and issues an account receivable on condition that the hundred million won is settled after 3 months and a purchase commission rate is 0.5% per month.

The company A (it is assumed that the company A is allowed to issue the account receivable as credit in a financial institution because it is a main contractor and has a high credit rating) issues the account receivable on condition that a receiving party is the company B, the date of issue is March 1, 2008, an agreement date (i.e., a payment date) is June 1, 2008, and a purchase commission rate is 0.5% per month (here, a purchase commission is a discount rate determined by other institution or a financial institution in case where the company B purchases the account receivable in advance from other institution or where a financial institution discounts the account receivable).

The account receivable has been issued as the financial account of the company B. Account-receivable data in the financial account of the company B is sent to a third-party payment system to which the company B has been subscribed as a member and then inputted to the third-party payment account of the company B.

The company B did not need to immediately encash the account receivable and has owned the account receivable received from the company A.

On April 1, 2008, the company B takes delivery of goods corresponding to 70 million won from a company C. The company B accesses the third-party payment system and issues an electronic certificate1 on condition that the electronic certificate1 is settled after 3 months and an encashment commission rate is 0.7% per month (here, an encashment commission rate of the electronic certificate1 is the addition of 0.2% per month to an encashment commission rate of the account receivable for which payment will be suspended and determined by the third-party payment system according to the present invention).

The payment of 70 million won from the amount of money of the account receivable in the financial account has been suspended, and the company B has issued the electronic certificate1 on condition that the receiving party of the electronic certificate1 is the company C, the date of issue is April 1, 2008, the agreement date (i.e., the payment date) is July 1, 2008, and the encashment commission is 0.7% per month. Here, the company B may not arbitrarily encash 70 million won from the amount of money of the account receivable. The electronic certificate1 has been issued as the third-party payment account of the company C.

The company C does not need to immediately encash the electronic certificate1 and owns the electronic certificate1 received from the company B.

On May 1, 2008, the company C takes delivery of goods corresponding to 50 million won from a company D and issues an electronic certificate2 on condition that the electronic certificate2 is settled after 3 months and an encashment commission rate is 0.9% per month (here, the encashment commission rate of the electronic certificate2 to be issued is the addition of 0.2% per month to the encashment commission rate of the account receivable1 and determined by the third-party payment system according to the present invention).

The payment of 50 million won from the amount of money of the electronic certificate1 in the third-party payment account has been suspended, and the company C has issued the electronic certificate2 on condition that the receiving party of the electronic certificate2 is the company D, the date of issue is May 1, 2008, the agreement date (i.e., the payment date) is August 1, 2008, and the encashment commission is 0.9% per month. Here, the company C may not arbitrarily encash 50 million won from the amount of money of the electronic certificate1.

The company D needs not to encash the electronic certificate2 and owns the electronic certificate2, received from the company C, until the expiration date.

The third-party payment system sends data (e.g., the name of the issuer, the name of the receiving party, the amount issued, the agreement date, and the encashment commission rate) for the electronic certificate1 and the electronic certificate2 to the financial institution server.

First step (June 1, 2008): on June 1, 2008, a hundred million won is transferred from the financial account of the company A to the financial account of the company B, the suspension of payment for the account receivable of the financial account of the company B is released (there is no problem if the suspension of payment is not released because the expiration date has expired), and payment for 70 million won in the financial account of the company B is suspended. It is preferred that the transfer of hundred million won to the financial account of the company B and the suspension of payment for 70 million won be performed at the same time. In case where when hundred million won will be deposited in the financial account of the company B is unclear, it is preferred that the suspension of payment for the account receivable in the financial account of the company B be not released, and payment for cash 70 million won be additionally suspended in addition to the amount of money of the financial account of the company B, for which payment has been suspended, simultaneously with the start of the expiration date.

Second step (June 1, 2008): on June 1, 2008, 70 million won is transferred from the financial account of the company B to the financial account of the company C, the suspension of payment for the electronic certificate1 in the third-party payment account of the company C is released (there is no problem if the suspension of payment is not released because the expiration date has expired), and payment for 50 millions won in the financial account of the company C is suspended. It is preferred that the transfer of 70 million won to the financial account of the company C and the suspension of payment for 50 million won be performed at the same time. In case where when 70 million won will be deposited in the financial account of the company C is unclear, it is preferred that the suspension of payment for the electronic certificate1 in the financial account of the company C be not released, and payment for cash 50 million won be additionally suspended in addition to the amount of money of the financial account of the company B, for which payment has been suspended, simultaneously with the start of the expiration date.

Third step (on August 1, 2008): on August 1, 2008, 50 millions won is transferred from the financial account of the company C to the financial account of the company D, and the process is terminated without other measures because payment for the electronic certificate2 in the third-party payment account of the company D is not suspended.

It is preferred that although payment for the amount of money deposited in the financial accounts of the companies B, C, and D is suspended, the highest interest rate of short-term financial products, such as MMF and CMA, be applied to the amount of money so that the amount of money has high interest despite surplus funds.

As can be seen from the above cases, in the electronic payment method according to the present invention, the last company seems to suffer a loss as much as an encashment commission, but may encash an electronic certificate at a low cost as compared with other places. Furthermore, unlike the existing notes, the last company is not influenced by dishonor of upper issuers because it does not have the right to make a claim for an electronic certificate or an account receivable for which payment has been suspended. Accordingly, it can be seen that the electronic payment method of the present invention has a structure in which all pertinent companies and institutions can make a profit.

### [Mode for Invention]

In order to solve the conventional problems, according to the present invention, there is provided an electronic payment method using a third-party payment server, a network, a terminal configured to access the third-party payment server over the network, and a financial institution server connected to the network, including an account-receivable issue step of an account-receivable issuer issuing an account receivable to a financial account of the financial institution server; an account-receivable date transmission step of sending data related to the account receivable to a third-party payment account of the third-party payment server; an electronic certificate issue step of issuing an electronic certificate having an encashment commission rate from a third-party payment account of the issuer to a third-party payment account of a receiving party by using an already received account receivable or electronic certificate as collateral; a repetition step of performing the electronic certificate issue step in which the receiving party becomes an issuer and issues an electronic certificate to a third-party payment account of another receiving party; a payment suspension step of suspending payment of the already received account receivable or electronic certificate which is the collateral of the electronic certificate, issued in the electronic certificate issue step or the repetition step, by a mortgage amount or making impossible a request for the payment of the already received account receivable or electronic certificate; a payment request step of the receiving party requesting payment of cash for any one of the received electronic certificates; a tracing step of the third-party payment server tracing a path of all electronic certificates or accounts receivable which are related to the electronic certificate for which the payment of cash has been requested in the payment request step; and an encashment step of, in case where there is an account receivable having an expiration date not elapsed in the path traced in the tracing step, encashing the account receivable, sequentially subtracting an encashment commission according to an encashment commission rate written in each of the electronic certificates from a first electronic certificate having an expiration date not elapsed, and performing deposition in associated financial accounts.

It is preferred that after the electronic certificate issue step, the electronic payment method further include an electronic certificate data notification step of notifying the financial institution server of data of the issued electronic certificate; an electronic certificate amount payment step of, when an expiration date of the electronic certificate is reached, paying an amount of money written in the electronic certificate from an financial account of the issuer to the financial account of the receiving party; and a cash payment suspension step of, when an expiration date of the account receivable or electronic certificate already received by the issuer is reached, cash as much as the amount of money of the electronic certificate issued in association with the already received account receivable or electronic certificate is suspended in the financial account of the issuer.

It is preferred that in the encashment step, the encashment of the account receivable be performed by generating a loan for the account receivable or by purchasing the account receivable by applying a specific discount rate to the account receivable.

It is preferred that the encashment step include a small and medium enterprise promotion compensation money payment step of adding some of the encashment commission, subtracted according to an encashment commission rate of any single electronic certificate, as small and medium enterprise promotion compensation money and supplying the small and medium enterprise promotion compensation money to the issuer of the electronic certificate, or paying some of the encashment commission, subtracted according to an encashment commission rate of any single electronic certificate, to the issuer of the electronic certificate as small and medium enterprise promotion compensation money in the encashment step.

The electronic certificate issue step may include presenting, to the issuer, an amount of money, an encashment commission rate, and an expiration term of an account receivable or electronic certificate for which payment has not been suspended in the third-party payment account of the issuer, finding a weighted average of the encashment commission rate according to the amount of money when an account receivable or electronic certificate for which payment will be suspended and the amount of money is selected, adding a predetermined numerical value to the found weighted average, and presenting the found weighted average having the predetermined numerical value added thereto as an encashment commission rate of an electronic certificate to be issued.

The electronic certificate issue step may include presenting encashment commission rates of electronic certificates to be issued which can be combined, from among amounts of money of account receivables or electronic certificates for which payment has not been suspended in the third-party payment account of the issuer, to the issuer so that the issuer may select the presented encashment commission rates.

It is preferred that the electronic certificate issue step include receiving a range of an expiration term of an account receivable or electronic certificate for which payment will be suspended and using an account receivable or electronic certificate, corresponding to a range of an expiration term of the account receivables or electronic certificates for which payment has not been suspended in the third-party payment account of the issuer, as an object of the combination.

### [Industrial Applicability]

The present invention may be applied to an electronic payment method using a network.

## Claims

1. An electronic payment method using a third-party payment server, a network, a terminal configured to access the third-party payment server over the network, and a financial institution server connected to the network, the electronic payment method comprising:
an account-receivable issue step of an account-receivable issuer issuing an account receivable to a financial account of the financial institution server;
an account-receivable date transmission step of sending data related to the account receivable to a third-party payment account of the third-party payment server;
an electronic certificate issue step of issuing an electronic certificate having an encashment commission rate from a third-party payment account of the issuer to a third-party payment account of a receiving party by using an already received account receivable or electronic certificate as collateral;
a repetition step of performing the electronic certificate issue step in which the receiving party becomes an issuer and issues an electronic certificate to a third-party payment account of another receiving party;
a payment suspension step of suspending payment of the already received account receivable or electronic certificate which is the collateral of the electronic certificate, issued in the electronic certificate issue step or the repetition step, by a mortgage amount or making impossible a request for the payment of the already received account receivable or electronic certificate;
a payment request step of the receiving party requesting payment of cash for any one of the received electronic certificates;
a tracing step of the third-party payment server tracing a path of all electronic certificates or accounts receivable which are related to the electronic certificate for which the payment of cash has been requested in the payment request step; and
an encashment step of, in case where there is an account receivable having an expiration date not elapsed in the path traced in the tracing step, encashing the account receivable, sequentially subtracting an encashment commission according to an encashment commission rate written in each of the electronic certificates from a first electronic certificate having an expiration date not elapsed, and performing deposition in associated financial accounts.

2. The electronic payment method according to claim 1, further comprising, after the electronic certificate issue step:
an electronic certificate data notification step of notifying the financial institution server of data of the issued electronic certificate;
an electronic certificate amount payment step of, when an expiration date of the electronic certificate is reached, paying an amount of money written in the electronic certificate from an financial account of the issuer to the financial account of the receiving party; and
a cash payment suspension step of, when an expiration date of the account receivable or electronic certificate already received by the issuer is reached, cash as much as the amount of money of the electronic certificate issued in association with the already received account receivable or electronic certificate is suspended in the financial account of the issuer.

3. The electronic payment method according to claim 2, wherein in the encashment step, the encashment of the account receivable is performed by generating a loan for the account receivable or by purchasing the account receivable by applying a specific discount rate to the account receivable.

4. The electronic payment method according to claim 2 or 3, wherein the encashment step comprises a small and medium enterprise promotion compensation money payment step of adding some of the encashment commission, subtracted according to an encashment commission rate of any single electronic certificate, as small and medium enterprise promotion compensation money and supplying the small and medium enterprise promotion compensation money to the issuer of the electronic certificate, or paying some of the encashment commission, subtracted according to an encashment commission rate of any single electronic certificate, to the issuer of the electronic certificate as small and medium enterprise promotion compensation money in the encashment step.

5. The electronic payment method according to claim 2 or 3, wherein the electronic certificate issue step comprises presenting, to the issuer, an amount of money, an encashment commission rate, and an expiration term of an account receivable or electronic certificate for which payment has not been suspended in the third-party payment account of the issuer, finding a weighted average of the encashment commission rate according to the amount of money when an account receivable or electronic certificate for which payment will be suspended and the amount of money is selected, adding a predetermined numerical value to the found weighted average, and presenting the found weighted average having the predetermined numerical value added thereto as an encashment commission rate of an electronic certificate to be issued.

6. The electronic payment method according to claim 4, wherein the electronic certificate issue step comprises presenting, to the issuer, an amount of money, an encashment commission rate, and an expiration term of an account receivable or electronic certificate for which payment has not been suspended in the third-party payment account of the issuer, finding a weighted average of the encashment commission rate according to the amount of money when an account receivable or electronic certificate for which payment will be suspended and the amount of money is selected, adding a predetermined numerical value to the found weighted average, and presenting the found weighted average having the predetermined numerical value added thereto as an encashment commission rate of an electronic certificate to be issued.

7. The electronic payment method according to claim 2 or 3, wherein the electronic certificate issue step comprises presenting encashment commission rates of electronic certificates to be issued which can be combined, from among amounts of money of account receivables or electronic certificates for which payment has not been suspended in the third-party payment account of the issuer, to the issuer so that the issuer selects the presented encashment commission rates.

8. The electronic payment method according to claim 4, wherein the electronic certificate issue step comprises presenting encashment commission rates of electronic certificates to be issued which can be combined, from among amounts of money of account receivables or electronic certificates for which payment has not been suspended in the third-party payment account of the issuer, to the issuer so that the issuer selects the presented encashment commission rates.

9. The electronic payment method according to claim 7, wherein the electronic certificate issue step comprises receiving a range of an expiration term of an account receivable or electronic certificate for which payment will be suspended and using an account receivable or electronic certificate, corresponding to a range of an expiration term of the account receivables or electronic certificates for which payment has not been suspended in the third-party payment account of the issuer, as an object of the combination.

10. The electronic payment method according to claim 8, wherein the electronic certificate issue step comprises receiving a range of an expiration term of an account receivable or electronic certificate for which payment will be suspended and using an account receivable or electronic certificate, corresponding to a range of an expiration term of the account receivables or electronic certificates for which payment has not been suspended in the third-party payment account of the issuer, as an object of the combination.
